# EUROPEAN PATENT SPECIFICATION

(11) **EP 2 598 780 B1**
(45) Date of publication and mention of the grant of the patent: **21.03.2018**
(21) Application number: 11733745.1
(22) Date of filing: 01.07.2011
(51) Int. Cl.: F16K 31/126, F16K 7/06, F16K 37/00

(54) **PINCH VALVES HAVING A MULTI-PIECE VALVE BODY TO RECEIVE FLEXIBLE TUBING**
PNEUMATISCHE SCHLAUCHQUETSCHVENTILE MIT EINEM MEHRTEILIGEN VENTILKÖRPER ZUR AUFNAHME FLEXIBLER SCHLÄUCHE
VANNES À MANCHON COMPORTANT UN CORPS DE VANNE EN PLUSIEURS PIÈCES POUR RECEVOIR DES TUYAUX FLEXIBLES

(30) Priority: 26.07.2010 US 843593
(43) Date of publication of application: 05.06.2013
(73) Proprietor: Fisher Controls International LLC, Marshalltown, IA 50158 (US)
(72) Inventor: WENNBERG, Jon, Peter, Portsmouth NH 03801 (US); ANAGNOS, Richard, James, Conrad IA 50621 (US); GOSS, Benjamin, March, Portsmouth NH 03801 (US)
(74) Representative: Wablat Lange Karthaus
(86) International application number: PCT/US2011/042745
(87) International publication number: WO 2012/018468

(56) References cited:
- DE-U1- 20 117 946
- GB-A- 2 408 788
- US-A1- 2004 112 436
- US-A1- 2005 035 317
- US-A1- 2006 048 818
- US-B1- 7 350 761

## Description

### FIELD OF THE DISCLOSURE

The present disclosure relates generally to fluid valves and, more particularly, to pinch valves having a multi-piece valve body to receive flexible tubing.

### BACKGROUND

Pinch valves are commonly used in bioprocess or biomanufacturing systems (e.g., in the bioreactor industry) to control the flow of process fluids through disposable fluid systems that store and transfer buffers or media (e.g., biofluids). Biomanufacturing, for example, typically involves the use of disposable storage mediums (e.g., plastic bags) and disposable fluid flow conduits (e.g., plastic/flexible tubing) to transfer fluid during, for example, batch processing.

Pinch valves typically have a valve stem (e.g., a sliding stem) that moves a flow control member (e.g., a valve plug or plunger) relative to a flexible tubing through which a process fluid flows. The flow control member moves between a closed position in which the flow control member deflects or deforms (e.g., pinches) the flexible tubing to prevent fluid flow through the flexible tubing and an open position to release the flexible fluid tubing to allow fluid flow through the flexible tubing. In this manner, the pinch valve provides shut-off control without touching the process fluid flowing through the flexible tubing.

Typically, known pinch valves include an actuator (e.g., a solenoid actuator) that is manually operated to move a flow control member between an open position and a closed position for on/off applications. However, many known pinch valves do not provide a sufficient clamping force to engage or retain the flexible tubing disposed within a valve body of the pinch valve. An insufficient clamping force may cause the flexible tubing to slide, shift or otherwise move in an axial direction relative to the body of the pinch valve. Such movement relative to the valve body may result in the pinch valve lacking sufficient shut-off for on/off applications, thereby permitting fluid leakage through the flexible tubing when the pinch valve is in the closed position.

US 2006/0048818 A1, on which the preamble of claim 1 is based, discloses a multi-port valve having a one-piece construction and including a casing having a bore and lock-in grooves. A removable, cylindrical flexible element is provided for communicating fluid through the valve. Further, the valve includes an actuator, wherein a piston operates a compressor bar in the actuator. The actuator has a mechanical stop.

US 2004/112436 A1 discloses a control valve, which is constructed as a pinch valve.

DE 201 17 946 U1 discloses a pinch valve including a pinch member which is operated by an electric motor.

GB-A- 2 408 788 discloses a diaphragm valve comprising a valve body and a diaphragm which is sealed to the valve body to define a flow passage. The valve body and the diaphragm are formed as a disposable assembly.

US 2005/0035317 A1 discloses a pinch valve, which has a single-piece construction.

US 7,350,761 B1 discloses a pedal-operated valve for controlling the fluid flow in a soft hose.

### SUMMARY

In one example, an example pinch valve includes a first body portion having a first recess and a second body portion having a second recess. The first body portion is movable relative to the second body portion. The first recess and the second recess define a passageway to receive a flexible tubing when the first body portion is coupled to the second body portion and the passageway is to retain the flexible tubing to prevent the flexible tubing from moving relative to the first and second body portions in an axial direction.

In another example, an example a pinch valve includes an upper valve body having a first end coupled to an actuator via a yoke and a first curved surface recessed relative to a second end of the upper valve body opposite the first end. A lower valve body includes a second curved surface recessed relative to a first end of the lower valve body and adjacent the second end of the upper valve body. The second curved surface substantially aligns with the first curved surface of the upper valve body to form a passageway to receive a first flexible tubing when the lower valve body is coupled to the upper valve body. The lower valve body is movable relative to the upper valve body between an open position at which the first flexible tubing is removable from the passageway and a closed position at which the first flexible tubing is clamped within the passageway.

### BRIEF DESCRIPTION OF THE DRAWINGS

FIGS. 1A and 1B illustrate an example pinch valve assembly having a multi-piece valve body apparatus described herein.
FIGS. 2A and 2B illustrate another example valve body apparatus described herein that may be used to implement a pinch valve.
FIG. 3 illustrates yet another example valve body apparatus described herein.
FIG. 4A and 4B illustrate another example valve body apparatus described herein that includes an adjustable mechanism to enable the valve body to receive tubing of different sizes.
FIG. 5A illustrates another example pinch valve described herein.
FIG. 5B is a top view of the example pinch valve of FIG. 5A.
FIG. 6A illustrates yet another example pinch valve described herein.
FIG. 6B is a top view of the example pinch valve of FIG. 6A.
FIG. 7 illustrates yet another example pinch valve described herein.

### DETAILED DESCRIPTION

The example pinch valves described herein capture a flexible tubing to substantially prevent movement of the flexible tubing in an axial direction during operation. In particular, the pinch valve includes a holder assembly or a multi-piece valve body having a first body portion (e.g., an upper valve body) removably or movably coupled relative to a second body portion (e.g., a lower valve body). For example, an example pinch valve described herein includes a hinged body to allow or facilitate quick replacement of a fluid flow conduit or path (e.g., a disposable flexible tubing). Unlike known pinch valves, the first and second body portions form a passageway that encircles or substantially surrounds the flexible tube to provide relatively greater clamping force to secure the flexible tubing when the first body portion is coupled to the second body portion. In other words, the passageway provides greater contact surface area between the valve body and any flexible tubing captured or clamped therein than known valve body apparatus. The passageway substantially surrounds the flexible tubing and prevents the flexible tubing from moving in an axial direction relative to the valve body during operation. A fastener and/or a hinge assembly enables the first body portion to move relative to the second body portion between a first position in which the flexible tubing can be easily removed from the passageway and a second position in which the flexible tubing is clamped within the passageway between the first and second body portions.

In some examples, an example valve includes a spherically-shaped valve control member to engage or deflect the flexible tubing to control fluid flow through the tubing. By varying the degree or amount of deflection (e.g., pinching) provided by the flow control member to the flexible tubing, the fluid flow through the flexible tubing can be modulated or otherwise controlled. Further, the spherically-shaped flow control member provides a tighter shut-off because the spherically-shaped flow control member can deflect a significantly greater amount of the flexible tubing than, for example, a V-shaped flow control member.

In other examples, an example pinch valve apparatus may be implemented with a positioner or digital valve controller to automate actuation of the pinch valve for on/off applications and/or throttling applications. Further, an example pinch valve described herein may be implemented with a position feedback system (e.g., a reed switch, a linear potentiometer, a sensor, etc.) to provide for more accurate or precise fluid flow control (e.g., to modulate the fluid flow in a throttling application). In yet another example, a pinch valve apparatus may be implemented with a visual indicator or travel indicator (e.g., an LED, a scale, etc.) to provide visual indication of the position of the pinch valve (e.g., a closed position, an open position, an intermediate position, etc.).

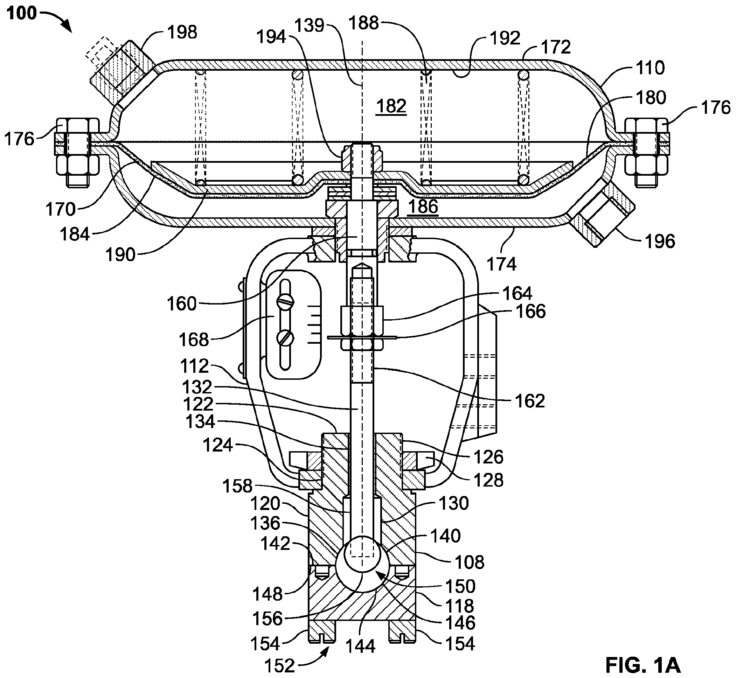

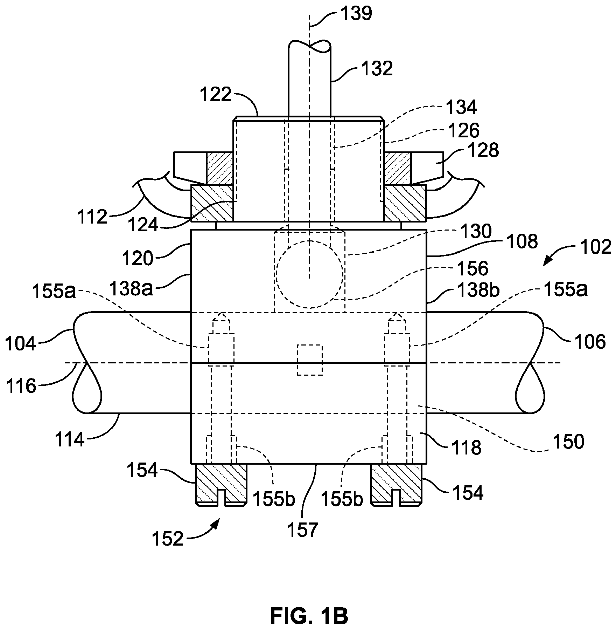

FIGS. 1A and 1B illustrate an example pinch valve 100 described herein to control fluid flow through a disposable fluid flow path or conduit 102 through which a process fluid flows (e.g., a biofluid). For example, an inlet or first end 104 of the disposable fluid flow path 102 may be fluidly coupled to a process fluid storage medium (e.g., a plastic storage bag) and an outlet or second end 106 of the disposable fluid path 102 may be fluidly coupled to a mixing medium (e.g. a plastic mixing bag).

Referring to FIGS. 1A and 1B, the example pinch valve 100 includes a tube holder assembly or a valve body 108 coupled to an actuator 110 via a yoke 112. In this example, the valve body 108 captures, clamps or retains the disposable fluid flow path 102. As shown, the disposable fluid flow path 102 is a flexible conduit or flexible tubing 114 (e.g., a resilient flexible tubing) composed of, for example, a rubber material, a polymer, etc. The valve body 108 captures, clamps or retains the flexible tubing 114 to prevent the flexible tubing 114 from moving or sliding relative to the valve body 108 along an axis 116.

The valve body 108 includes a first portion or lower body 118 that is movable relative to a second portion or upper body 120 (e.g., a bonnet). As shown, the upper body 120 includes a stepped portion 122 that is disposed in an opening 124 of the yoke 112. The stepped portion 122 includes a threaded outer surface 126 to receive a fastener 128 (e.g., a clamp nut) that couples the upper body 120 and the yoke 112. The upper body 120 also includes a longitudinal aperture 130 to slidably receive a valve stem 132. A bushing 134 may be disposed within the longitudinal aperture 130 to facilitate movement (e.g., reduce friction) between the valve stem 132 and the upper body 120. The upper body 120 also includes an opening or recess 136 (e.g., an arc-shaped or a curved opening, a groove or channel, etc.) that extends along the axis 116 between a first side or end 138a of the valve body 108 and a second side or end 138b of the valve body 108. In this example, the opening 136 provides an arcuate or curved surface 140 that is recessed relative to an end or surface 142 of the upper body 120.

Similarly, the lower body 118 includes an opening or recess 144 (e.g., an arc-shaped or a curved opening, a groove or channel, etc.) that extends along the axis 116 between the first and second sides 138a and 138b of the valve body 108. As shown, the opening or recess 144 provides an arcuate or curved surface 146 that is recessed relative to an end or surface 148 of the lower body 118. In this example, the opening 144 of the lower body 118 is substantially similar to the opening 136 of the upper body 120 so that when the lower body 118 is coupled to the upper body 120, the openings 136 and 144 define a passageway 150 (e.g., a cavity or receiving area). As most clearly shown in FIG. 1B, the passageway 150, formed by the upper body 120 and lower body 118, receives, secures or captures the flexible tubing 114. In some examples, a radius of curvature of the passageway 150 is substantially similar to a radius of curvature of the flexible tubing 114.

The lower and/or upper body portions 118 and 120 may be made via machining, casting, molding, or any other suitable manufacturing process. Further, the lower and/or upper body portions 118 and 120 may be composed of metal (e.g., stainless steel), plastic (hard plastic), or any other suitable material.

In this example, the lower body 118 is removably coupled to the upper body 120 via a locking mechanism 152. As shown, the locking mechanism 152 includes a plurality of fasteners 154 (e.g., thumb screws) disposed within apertures or bores 155a of the upper body 120 and apertures or bores 155b of the lower body 118 to removably couple the upper and lower body portions 118 and 120. As shown, the bores 155a and 155b are substantially aligned and the fasteners 154 are disposed within the bores 155a and 155b via a bottom surface 157 of the lower body 118. The fasteners 154 are removed from the bores 155a of the upper body 120 to enable the lower body 118 to move relative to the upper body 120 between an open position at which the flexible tubing 114 may be removed from the passageway 150 and a closed position at which the flexible tubing 114 is clamped in the passageway 150. In the closed position, the curved recessed surfaces 140 and 146 and/or the passageway 150 substantially surround or encircle the flexible tubing 114 to hold or secure the flexible tubing 114 in position and prevent the flexible tubing 114 from moving in an axial direction relative to the valve body 108 along the axis 116. In other words, the surfaces 140 and 146 or the passageway 150 substantially surround a portion (e.g., an outer surface or wall) of the flexible tubing 114 disposed within the passageway 150 between the first and second sides 138a and 138b of the valve body 108.

A flow control member or valve plug 156 is coupled to a first end 158 of the valve stem 132 and is disposed within the passageway 150. As shown, the flow control member 156 is a spherically-shaped plunger that moves relative to (e.g., deflects or engages) the flexible tubing 114 to control the fluid flow through the flexible tubing 114. By varying the degree or amount of deflection (e.g., pinching) provided by the flow control member 156 to the flexible tubing 114, the fluid flow through the flexible tubing 114 can be controlled. However, in other examples, the flow control member 156 may be a gate plug, a V-shaped plug, or any other flow control member.

The valve stem 132 and, thus, the flow control member 156 are operatively coupled to the actuator 110 via an actuator stem 160. As shown, a second end 162 of the valve stem 132 is coupled to the actuator stem 160 via a coupling 164, which includes a travel indicator 166 (e.g., a washer) that moves relative to a scale 168 coupled to the yoke 112. The travel indicator 166 provides a visual indication of the position of the valve stem 132 and, thus, the position of the flow control member 156 relative to the flexible tubing 114 (e.g., open position, closed position, etc.).

In the illustrated example, the actuator 110 includes an actuation control member 170 (e.g., a diaphragm, a piston, etc.) disposed between an upper casing 172 and a lower casing 174. The upper casing 172 is coupled to the lower casing 174 via a plurality of fasteners 176. In this example, the actuation control member 170 is a diaphragm 170 that is captured between the upper casing 172 and the lower casing 174 such that a first side 180 of the diaphragm 170 and the upper casing 172 define a first or upper chamber 182 and a second side 184 of the diaphragm 170 and the lower casing 174 define a second or control chamber 186. A biasing element 188 (e.g., a spring) is disposed in the upper chamber 182 and imparts a force on the first side 180 of the diaphragm 170 to bias the diaphragm 170 toward the lower casing 174. As shown, the biasing element 188 is disposed between a diaphragm plate or spring seat 190 and a surface 192 of the upper casing 172. The actuator stem 160 is coupled to the diaphragm 170 via the diaphragm plate 190 and a fastener 194.

Although not shown, the pinch valve 100 may include a positioner (e.g., a pneumatic positioner, an electro-pneumatic control, etc.) or a valve controller (e.g., a digital valve controller) to control or modulate the fluid flow through the flexible tubing 114 for throttling applications and/or on/off applications.

In operation, the actuator 110 moves the flow control member 156 relative to the flexible tubing 114 to control or modulate the fluid flow through the flexible tubing 114. The pinch valve 100 controls fluid flow through the flexible tubing 114 without contacting the process fluid flowing through the flexible tubing 114. For example, the actuator 110 moves the flow control member 156 away from the flexible tubing 114 to allow fluid flow through the flexible tubing 114 (e.g., an open position) and moves the flow control member 156 toward (e.g., deflects or pinches) the flexible tubing 114 to restrict or modulate fluid flow through the flexible tubing 114 (e.g., a closed position).

A control fluid such as, for example, pressurized air is supplied to, or removed from, the lower chamber 186 via a port 196 of the lower casing 174. The biasing element 188 and the control fluid in the lower chamber 186 create a pressure differential across the diaphragm 170 to move the diaphragm 170 in either a first direction along the axis 139 or a second direction along the axis 139 opposite the first direction. For example, the diaphragm 170 moves in the first direction (e.g., a downward direction in the orientation of FIG. 1A) when the pressure of the control fluid in the lower chamber 186 exerts a force on the second side 184 of the diaphragm 170 that is less than the force exerted on the first side 180 of the diaphragm 170 by the biasing element 188 (e.g., the control fluid in the control chamber 186 is removed). Conversely, the diaphragm 170 moves in the second direction (e.g., an upward direction in the orientation of FIG. 1A) opposite the first direction when the pressure of the control fluid in the lower chamber 186 exerts a force on the second side 184 of the diaphragm 170 that is greater than the force exerted on the first side 180 of the diaphragm 170 by the biasing element 188. The upper chamber 182 may include a vent 198 that may vent to atmospheric pressure so that the control fluid in the lower chamber 186 need only overcome the force of the biasing element 188 to move the diaphragm 170 toward the upper casing 172.

As the actuator 110 moves the flow control member 156 toward the flexible tubing 114, the flow control member 156 engages or deflects (e.g., pinches or squeezes) the flexible tubing 114 to control fluid flow to provide fluid flow characteristics during operation (e.g., to modulate the fluid flow or provide a tight shut-off). For example, in a closed position, the flow control member 156 deflects the flexible tubing 114 to provide a tight shut-off and prevent fluid flow through the flexible tubing 114.

Unlike known pinch valves in which flexible tubing is fed or pushed through an opening of a valve body, the example valve body 108 may be opened and then clamped around the flexible tubing 114 to capture or secure the flexible tubing 114 to prevent the flexible tubing 114 from moving in an axial direction during operation. Additionally or alternatively, unlike the known pinch valves that include a substantially flat plate on which the flexible tubing rests, the passageway 150 (e.g., via the curved surfaces 142 and 146) provides a greater amount of surface area to contact or engage the flexible tubing 114, thereby providing greater clamping force to prevent the flexible tubing 114 from moving or sliding in an axial direction relative to the valve body 108. In other words, the passageway 150 substantially surrounds or encircles an outer surface or wall of the flexible tubing 114.

Further, the spherically-shaped flow control member 156 provides significantly greater shut-off performance because the shape of the flow control member 156 deforms a greater amount of the flexible tubing 114 compared to, for example, a V-shaped valve plug. The spherical flow control member 156 has a contour or shape that is substantially similar to the contour of the flexible tubing 114 when the flexible tubing 114 is being pinched or engaged by the flow control member 156. Thus, the spherical flow control member 156 provides greater surface area to contact or engage the flexible tubing 114 when the flexible tubing 114 is being deflected by the flow control member 156, thereby providing improved shut-off performance.

The pressure in the lower chamber 186 may be completely exhausted or may be only partially exhausted, thereby controlling the overall travel of the flow control member 156 relative to the flexible tubing 114 to provide on/off applications or throttling applications. For example, the pinch valve 100 may be configured to move over a partial stroke of the overall actuator stroke (e.g., over one-half of the stroke, one-third of the overall stroke, etc.) to modulate the fluid flow. In particular, by using a positioner (e.g., a pneumatic positioner, an electro-pnuematic positioner, etc.) or a valve controller (e.g., a digital valve controller), the pinch valve 100 (i.e., the flow control member 156) may be configured to move to a specific position to provide fluid flow characteristics for different process system parameters or applications (e.g., to modulate the fluid flow for throttling application or control fluid flow for on/off applications).

In the example of FIGS. 1A and 1B, the actuator 110 is a spring and diaphragm pneumatic actuator. However, in other examples, the actuator 110 may be a piston actuator, a double acting actuator, a solenoid actuator, or any other suitable actuator. Additionally or alternatively, in the example of FIGS. 1A and 1B, the actuator 110 is configured as an air-to-open configuration when coupled to a valve body such as, for example, the valve body 108 of FIGS. 1A and 1B. In other words, the example actuator 110 is configured so that in a non-operative or fail condition (e.g., air is removed from the lower chamber 186), the actuator 110 causes the flow control member 156 to move toward the flexible tubing 114 to prevent fluid flow through the flexible tubing 114 (e.g., provide shut-off). However, in other examples, the actuator 110 may be configured as an air-to-close configuration such that in a non-operative or fail condition, the actuator 110 causes the flow control member 156 to move away from the flexible tubing 114 to allow fluid flow through the flexible tubing 114.

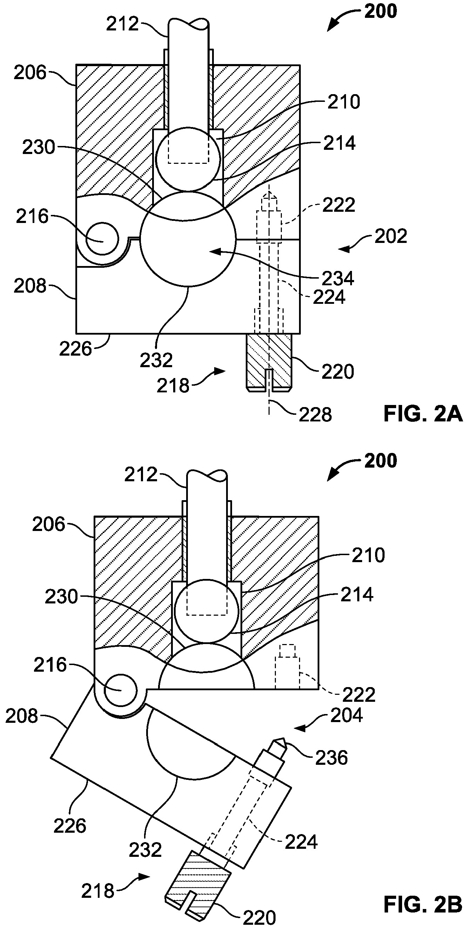

FIGS. 2A and 2B illustrate another example tube holding assembly or multi-piece valve body 200 described herein that may be used to implement a pinch valve such as, for example, the pinch valve 100 of FIGS. 1A and 1B. FIG. 2A illustrates the valve body 200 in a closed or clamping position 202 and FIG. 2B illustrates the valve body 200 in an open or release position 204. In the illustrated, the valve body 200 includes a first portion or upper body 206 (e.g., a bonnet) and a second portion or lower body 208. The upper body includes an aperture 210 to slidably receive a valve stem 212 and a flow control member 214.

In this example, the lower body 208 is movably or hingably coupled to the upper body 206. In particular, the lower body 208 is coupled to the upper body 206 via a hinge pin 216. In other examples, any other suitable hinge (e.g., a hinge bracket, etc.) may be used to hingably couple the upper body 206 and the lower body 208. A locking mechanism 218 retains or couples the lower body 208 and the upper body 206. In this example, the locking mechanism 218 includes a fastener 220 (e.g., a thumb screw) that engages a bore or aperture 222 of the upper body 206 and a bore or aperture 224 of the lower body 208 via a bottom surface 226 of the lower body 208. As shown, the bores 222 and 224 are substantially aligned along an axis 228 when the lower body 208 is fastened (via the fastener 220) to the upper body 206. Similar to the valve body 108 of FIGS. 1A and 1B, the upper body 208 and the lower body 206 include respective recessed surfaces 230 and 232 or channels (e.g., curved surfaces) that form a passageway 234 to receive a disposable fluid flow path or flexible tubing (not shown) when the lower body 208 is coupled to the upper body 206 via the fastener 220.

To release or remove a flexible tubing disposed within the passageway 234 of the valve body 200, the fastener 220 is loosened until a first portion 236 of the fastener 220 is removed from the bore 222 of the upper body 206. The lower body 208 is moved or rotated about the hinge pin 216 to the open position 204 as shown in FIG. 2B where a flexible tubing may be removed from the passageway 234 or disposed within the passageway 234. The lower body 208 is rotated or swung into engagement with the upper body 206 and the fastener 220 is tightened so that the fastener 220 is disposed within the bore 222 of the upper body 206. When the fastener 220 is tightened, the passageway 234 provides a clamping force to retain the flexible tubing within the passageway 234 and prevent the flexible tubing from moving in an axial direction relative to the valve body 200. In other examples, the fastener 220 may be a spring-loaded pin that is biased toward the bore 222 of the upper body 206 that is pulled away from the bottom surface 226 to enable movement of the lower body 208 relative to the upper body 206.

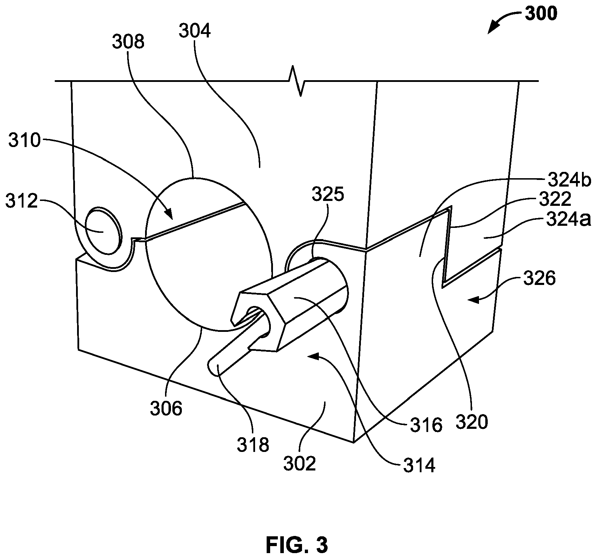

FIG. 3 illustrates another example tube holding assembly or multi-piece valve body 300 that may be used to implement an example pinch valve such as, for example, the pinch valve 100 of FIGS. 1A and 1B. In this example, the valve body 300 includes a first portion or lower body 302 movably or hingably coupled relative to a second portion or upper body 304 (e.g., a bonnet). Similar to the valve body 108 of FIGS. 1A and 1B and the valve body 200 of FIGS. 2A and 2B, the lower body 302 and the upper body 304 include respective recessed surfaces 306 and 308 that cooperate to form a passageway 310 to receive a disposable fluid flow path or flexible tubing (not shown) when the lower body 302 is coupled to the upper body 304.

In this example, the lower body 302 is coupled to the upper body 304 via a hinge pin 312. Additionally, a locking mechanism 314 removably couples the lower body 302 and the upper body 304. In particular, the locking mechanism 314 includes a spring-loaded pin 316. The pin 316 includes an end 318 having a contoured shape to facilitate activation of the locking mechanism 314. The lower body 302 includes a stepped portion or profile 320 that matably engages with a stepped portion or profile 322 of the upper body 304. A protruding portion 324a of the stepped portion 322 includes an aperture (not shown) that aligns with an aperture 325 of a protruding portion 324b of the stepped portion 320. The apertures receive the locking mechanism 314 when the lower body 302 engages the upper body 304 in a closed position 326 as shown in FIG. 3. When the locking mechanism 314 is received within the apertures of the protruding portions 324a and 324b, the locking mechanism 314 retains or locks the position of the valve body 300 in the closed position shown in FIG. 3.

To release and move the lower body 302 relative to the upper body 304 (e.g., to an open position), the pin 318 is moved or pulled laterally along an axis of the pin 318 until the pin 318 is removed or disengaged from the aperture of the protruding portion 324a. A flexible tubing (not shown) may be disposed within the passageway 310 and the lower body 302 may then be rotated about the hinge 312 until the lower body 302 engages the upper body 304. When in the engaged position, the pin 316 is released and a biasing element (not shown) biases the pin 316 within the aperture of the protruding portion 324a to retain the valve body 300 in the closed position 326.

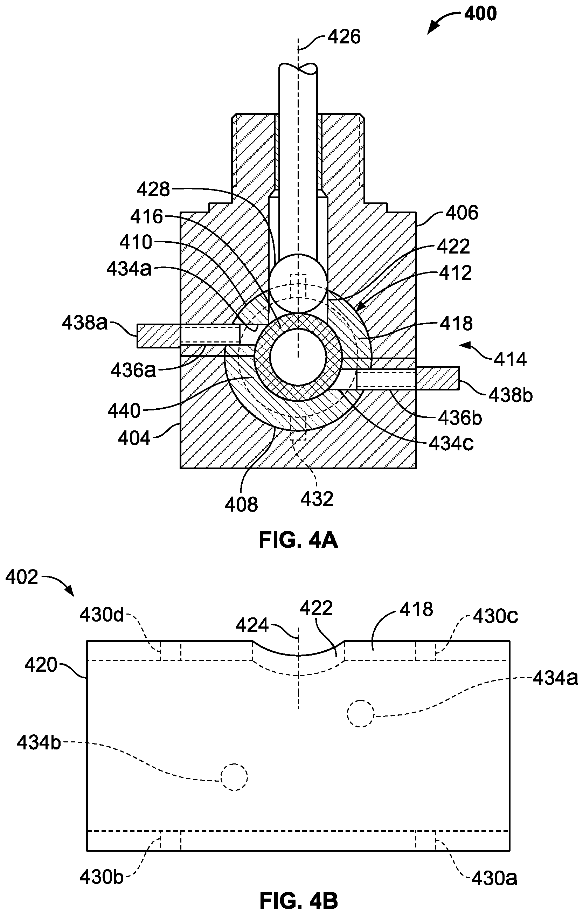

FIGS. 4A and 4B illustrate an example valve body that may be used to implement an example pinch valve such as, for example, the pinch valve 100 of FIGS. 1A and 1B. The example valve body 400 includes an adjustable mechanism 402 to enable the valve body 400 to receive disposable fluid flow paths (e.g., the disposable fluid flow path 102 of FIG. 1B) having different geometry (e.g., different sizes or shapes).

Similar to the valve bodies 108, 200 and 300 of FIGS. 1A, 1B, 2A, 2B and 3, the multi-piece valve body 400 includes a lower body 404 removably coupled to an upper body 406. The lower body 404 includes a recessed surface 408 (e.g., a curved surface) and the upper body 406 includes a recessed surface 410 (e.g., a curved surface) that form a passageway 412 of the valve body 400 when the lower body 404 is coupled to the upper body 406 in a closed position 414 as shown in FIG. 4A. In the closed position, the passageway 412 provides a clamping force to prevent movement of a flexible tubing 416 in an axial direction relative to the valve body 400. Although not shown in this example, the valve body 400 includes a locking mechanism to retain the valve body 400 in the closed position 414 when the lower body 404 is coupled to the upper body 406.

In this example, an adjustable mechanism 402 such as a sleeve or an insert 418 that may be disposed within the passageway 412 to reduce the size the passageway 412 to accommodate or receive different sized (e.g., relatively smaller) flexible tubing. The insert 418 may be a unitary piece or structure or may be composed of multiple parts or pieces. The insert 418 may be coupled to either the recessed surface 410 of the upper body 406 and/or the recessed surface 408 of the lower body 404.

Referring also to FIG. 4B, the insert 418 includes a cylindrical body 420 having an opening or aperture 422 that has an axis 424 to be axially aligned with an axis 426 of the valve body 400 to allow or enable a flow control member 428 to engage the flexible tubing 416. The cylindrical body 420 may also include apertures 430a-d any of which may receive fasteners (not shown)(e.g., a pin, a screw, a rivot, etc.) to couple the insert 418 to the recessed surface 410 of the upper body 406 and/or the recessed surface 408 of the lower body 404. The recessed surface 404, for example, may include an aperture 432 that aligns with the aperture 430a to receive a fastener to couple the insert 418 to the recessed surface 408.

Additionally or alternatively, the cylindrical body 420 may include an opening or a slot 434a that aligns with access bore or opening 436a of the valve body 400 to receive a fastener 438a (e.g., a thumb screw, a pin, etc.). The fastener 438a may be coupled or disposed within the slot 434a via the bore 436a to retain or couple the insert 418 within the passageway 412 of the valve body 400. As shown, a second fastener 438b may be disposed within an opening or slot 434c of the insert 418 via a second bore or opening 436b of the valve body 400 to retain or couple the insert 418 (e.g., a second insert or a split portion of the insert 418) within the passageway 412. As shown the openings 434a and 434b are substantially perpendicular to the axis 426 of the valve body 400. However, in other examples, the openings 434a and 434b and, thus, the bores 436a and 436b may be at any other angle relative to, for example, the axis 426.

The insert 418 may be interchangeable with another insert (not shown) having a different size (e.g., an inner diameter), shape and/or thickness than the size, shape and/or thickness of the insert 418 to enable the passageway to receive a differently sized tubing. Alternatively, a plurality of inserts may be coupled together (e.g., one inside another or nested) to further reduce the size (e.g., the diameter) of the passageway 412. As shown, a second insert 440 may be coupled or nested with the insert 418 to further reduce the size of the passageway 412. For example, the insert 418 may be used to reduce the size of the passageway 412 to, for example, receive a flexible tubing having a diameter of 1-inch, and the insert 440 may be used to further reduce the size of the passageway 412 to, for example, receive the flexible tubing 416 having a diameter of 0.75 inches.

The example inserts 418 and 440 enable the valve body 400 to retain or receive a variety of differently sized flexible tubing within the passageway 414 of the valve body 400. The inserts 418 and 440 may be made of a metallic material, a plastic material, a rubber material and/or any other suitable material. Although not shown, the example valve bodies 108, 200 and 300 of FIGS. 1A, 1B, 2A, 2B and 3 may be implemented with the inserts of FIGS. 4A and 4B to reduce the size (e.g., the diameter) of the respective passageways 150, 234, 310 to receive differently sized tubing. Additionally or alternatively, although not shown, the adjustable mechanism 402 may include a clamping mechanism (e.g., a pneumatically adjustable clamping mechanism) that can adjust the size of the passageway to receive or accommodate differently sized tubing (e.g., tubing having different outer diameters).

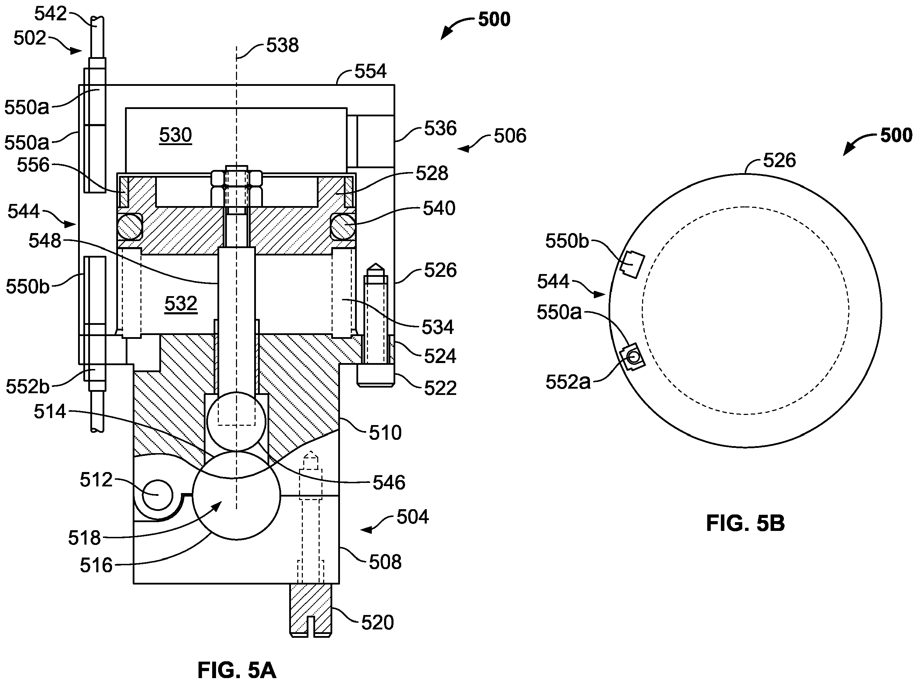

FIG. 5A illustrates another example pinch valve 500 described herein implemented with a feedback control system 502. FIG. 5B illustrates a top view of the example pinch valve 500 of FIG. 5A. The example pinch valve 500 provides a more compact or smaller footprint than, for example, the pinch valve 100 of FIGS. 1A and 1B.

Referring to FIGS. 5A and 5B, the pinch valve 500 includes a valve body 504 coupled to an actuator 506. In this example, the valve body 504 includes a first portion or lower body 508 pivotally or movably coupled to a second portion or upper body 510 via a hinge 512 (e.g., a hinge pin). A surface 514 (e.g., a curved surface) of the upper body 510 and a surface 516 (e.g., a curved surface) of the lower body 508 cooperate to form a passageway 518 through the valve body 508 to receive or clamp a flexible fluid flow path or flexible tubing (e.g., the flexible tubing 114 of FIG. 1B) to prevent movement of the flexible tubing in an axial direction relative to the valve body 504. A locking mechanism 520 (e.g., a thumb screw) retains or removably couples the lower body 508 and the upper body 510. As shown, a fastener 522 (e.g., a thumb screw) couples the valve body 504 and the actuator 506 via a flange 524 that is integrally formed with the upper body 510.

The actuator 506 includes a housing 526 having a piston 528 disposed therein to define a first or upper chamber 530 and a second or lower chamber 532. A biasing element 534 is disposed within the lower chamber 532 to bias the piston 528 toward the upper chamber 530 and a control fluid (e.g., pressurized air) is fluidly coupled to the upper chamber 530 via a port 536. The control fluid and the biasing element 534 provide a pressure differential across the piston 528 to move the piston 528 in either a first direction toward the lower chamber 532 along a longitudinal axis 538 or a second direction opposite the first direction. The piston 528 includes a seal 540 to prevent the control fluid from flowing or leaking between the upper and lower chambers 530 and 532.

The position feedback system 502 may include for example, a sensor or switch 542 (e.g., a magnetic switch) to indicate or provide a discrete location or position of the piston 528 (e.g., an open position, a closed position, etc.). In this example, the position feedback system includes a switch assembly 544 (e.g., a proximity switch assembly) to detect or determine the position of the piston 528 and, thus, a position of a flow control member 546 that is disposed within the passageway 518 and which is operatively coupled to the piston 528 via a stem 548. As shown, the housing 526 includes slots or openings 550a and 550b integrally formed with the housing 526 to receive (e.g., slidably receive) the switch assembly 544.

For example, the switch assembly 544 may include a first switch 552a and a second switch 552b. In this example, the first and second switches 552a and 552b may be Festo reed switches manufactured by Festo AG & CO. In some examples, a plurality of switches may be disposed within a plurality of openings or slots integrally formed with the housing 526 about the perimeter of the housing 526. The slots 550a and/or 550b may include or have cross-sectional shapes that are similar to the cross-sectional shapes of the switches 552a and/or 552b. Additionally or alternatively, although not shown, the slots 550a and/or 550b may be tapered or shaped to frictionally receive the switches 552a and 552b. In other examples, the switches 552a and 552b may be coupled within the slots 550a and 550b via a coupling mechanism (e.g., a mechanical fastener, a chemical fastener, a clip, etc.). In some examples, the switches 552a and 552b may include a visual indicator such as, for example, an LED to provide visual indication of the position of the piston 528 (e.g., a red LED to indicate a closed position of the pinch valve 500 and a green LED to indicate an open position of the pinch valve 500).

Additionally or alternatively, the pinch valve 500 may include a linear potentiometer (not shown) coupled to the piston 528 and/or any other position feedback system 502 to detect the position of the pinch valve 550. The potentiometer can provide greater position feedback accuracy (e.g., 35% of stroke position) for more precise or accurate fluid flow control. For example, a linear potentiometer may be used to control the stroke position of the piston 528 to within about 0.001 inches. Also, a stem extender (not shown) may be slidably coupled to a top surface 554 of the housing 526 to drive the linear potentiometer and activate the switches 552a and 552b when the piston 528 moves between an open position (e.g., a fully open position) or a closed position (e.g., a fully closed position). Although not shown, as noted above, the example pinch valve 500 may include a positioner or valve controller that receives the signal generated by the position feedback system 502. The positioner or the controller can process the signal and cause the flow control member 546 to move relative to the flexible tubing to provide a certain or desired fluid flow characteristic or fluid flow control (e.g., throttling application, on/off application, etc.).

In operation, in this example, the switches 552a and 552b are triggered via a magnet 556 coupled to the piston 528 to indicate the travel or stroke position of the piston 528 and, thus, the flow control member 546. As shown, the switches 552a and 552b indicate the fully open position and the fully closed position of the pinch valve 550. Thus, as the piston 528 and, thus, the magnet 556 move or travel toward the lower chamber 532, the switch 550b provides or generates a signal to indicate the position of the pinch valve 550 at a closed position. Likewise, as the piston 528 and, thus the magnet 556 move toward the upper chamber 530, the switch 550a provides or generates a signal to indicate the position of the pinch valve 500 at an open position. However, in other examples, the switches 552a and/or 552b may be located or configured to provide or generate a signal when piston 528 is between a fully open position and a fully closed position.

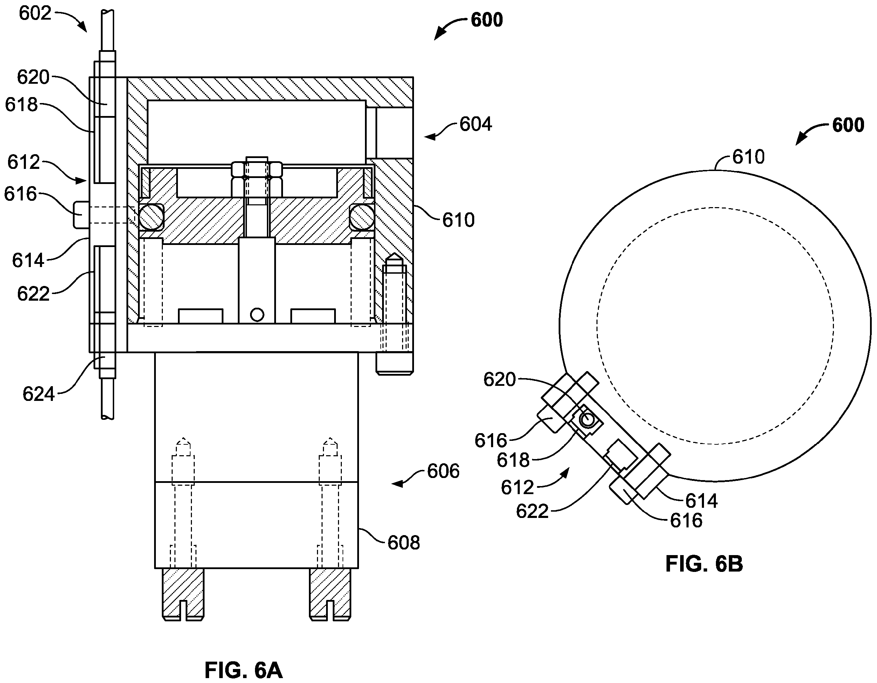

FIG. 6A illustrates another example pinch valve 600 described herein implemented with a feedback control system 602. FIG. 6B illustrates a top view of the example pinch valve 600 of FIG. 6A. In this example, an actuator 604 (e.g., a piston actuator) is coupled to a valve body 606 having a removable portion 608 and the feedback control system 602 is coupled to a housing 610 of the actuator 604. As shown, the feedback control system 602 includes a switch assembly 612. The switch assembly 612 includes a bracket 614 that is coupled to the housing 610 of the actuator 606 via fasteners 616. The bracket 614 includes a body having a first opening or slot 618 to receive a first switch 620 and a second opening or slot 622 to receive a second switch 624. The slots 618 and 622 may have cross-sectional shapes that are similar to the cross-sectional shapes of the switches 620 and 624. Additionally or alternatively, although not shown, the slots 618 and 622 may be tapered or shaped to frictionally receive the switches 620 and 622.

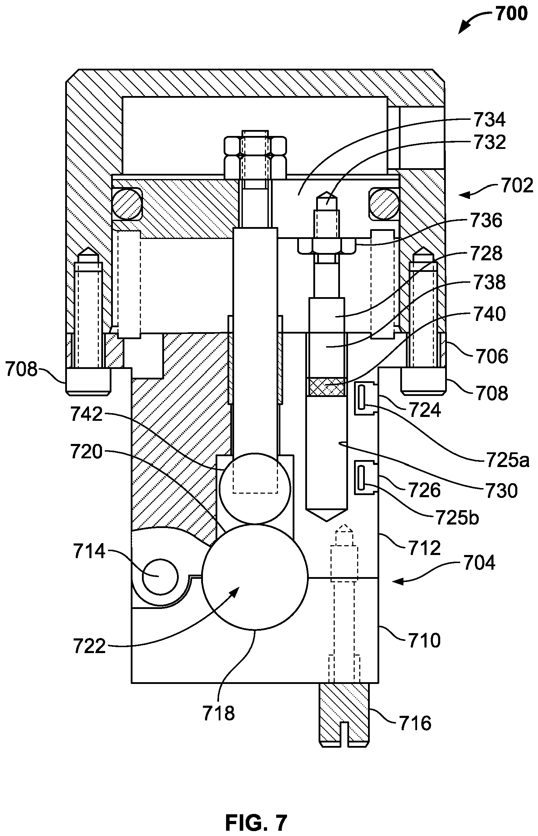

FIG. 7 illustrates yet another example pinch valve 700 described herein. The example pinch valve 700 includes an actuator 702 (e.g. a piston actuator) coupled to a valve body 704 via a flange 706 and fasteners 708. The valve body 704 includes a first valve body portion 710 movably coupled to a second valve body portion 712 via a hinge 714. A locking mechanism 716 retains the first and second valve body portions 710 and 712 in a closed position so that a first surface 718 of the first valve body portion 710 and a second surface 720 of the second valve body portion 712 form or define a passageway 722 through the valve body 704.

In this example, the second valve body portion 712 includes a first opening 724 to receive a first sensor 725a and a second opening 726 adjacent the first opening 724 to receive a second sensor 725b. For example, the first opening 724 is positioned on the valve body 704 to correspond to a first or open position (e.g., a fully open position) of the pinch valve 700 and the second opening 726 is positioned on the valve body 704 to correspond to a second or closed position (e.g., a fully closed position) of the pinch valve 700. A rod 728 is disposed within a channel or bore 730 formed in the second valve body portion 712 adjacent the first and second openings 724 and 726. A first end 732 of the rod 728 is coupled to a piston 734 of the actuator 702 via a fastener 736. The rod 728 moves or travels along with the piston 734 between, for example, the open and closed positions of the pinch valve 700. A second end 738 of the rod 728 includes a sensor or magnet 740 that activates or trips the first or second sensors as the piston 734 moves between the open position at which the sensor 740 is adjacent the first opening 724 and the closed position at which the sensor 740 is adjacent the second opening 726. The sensors 725a,b generate a signal to indicate the position of the piston 734 and, thus, a flow control member 742 operatively coupled to the piston 734.

Although not shown, in other examples, the pinch valves 100, 500, 600 or 700 described herein may be implemented with a printed circuit board that may include sensors (e.g., two reed switches) and visual detection indicators (e.g., two LEDs). The printed circuit board may be housed within a housing (e.g., the housing 526 or 610) of an actuator (e.g., the actuators 110, 506, 604 or 702) and the housing may include openings or visual detection passages (e.g., a see-through portion formed with the housing, an aperture, etc.) to display the visual detection indicators.

Although certain example methods and apparatus have been described herein, the scope of coverage of this patent is not limited thereto. On the contrary, this patent covers all methods, apparatus, and articles of manufacture fairly falling within the scope of the appended claims.

## Claims

1. A pinch valve comprising:
a valve body (300) comprising:
an upper body portion (304) having a first channel (308);
a lower body portion (302) having a second channel (306), the upper body portion movably coupled to the lower body portion with a hinge (312),
a locking mechanism (314) to couple the lower body portion (302) and the upper body portion (304),
wherein the first channel (308) and the second channel (306) define a passageway (310) extending along an axis (116) from a first side of the valve body to a second side of the valve body to receive a flexible tubing (102) when the first body portion is coupled to the second body portion, and wherein the passageway (310) is to retain the flexible tubing (102) to prevent the flexible tubing from moving relative to the first and second body portions in an axial direction;
wherein the upper body portion includes a longitudinal aperture (210) substantially perpendicular to the passageway (234) to slidably receive a valve stem (212);
a flow control member (214) disposed within the passageway (234) and slidably received by the longitudinal aperture, **characterized in that** the flow control (214) member comprises a spherically shaped valve plug that is arranged to be moved by the valve stem (212) to pinch the flexible tubing, **in that** the upper body portion has a first stepped profile (320) defining a first protruding portion (324a) with a first aperture extending through the first protruding portion, the lower body portion has a second stepped profile (320) defining a second protruding portion (324b) with a second aperture (325) extending through the second protruding portion, wherein the first stepped profile matably engages the second stepped profile with the first aperture aligned with the second aperture, and **in that** the locking mechanism (314) comprises a spring-loaded pin (316) received through the first and second apertures to lock the first body portion and the second body portion together in a closed position.

2. A pinch valve according to claim 1, further comprising a bushing (134) disposed in the longitudinal aperture to reduce friction with the valve stem.

3. A pinch valve according to any of the preceding claims, wherein the first channel and second channel comprise curved walls.

4. A pinch valve according to any of the preceding claims, wherein the passageway substantially surrounds an outer surface of the flexible tubing when the flexible tubing is coupled to the pinch valve.

5. A pinch valve according to any of the preceding claims, further comprising a first sleeve (418) removably coupled to the first channel and/or a second sleeve removably coupled to the second channel to reduce a size of the passageway when the upper and lower body portions are coupled together to receive a relatively smaller flexible tubing, an access bore (436a/b) through at least one of the upper and lower body portions, and a screw (438a/b) extending through the access bore to retain the sleeve within the passageway.

6. A pinch valve according to claim 5, further comprising an opening or groove (434a/b) along the sleeve to receive the screw.

7. A pinch valve according to any of the preceding claims, further comprising an actuator (506) and a position feedback system (502) coupled to a housing (526) of the actuator (506), the position feedback system comprising a proximity switch (544) mounted within the housing of the actuator and arranged to sense movement of the actuator.

8. A pinch valve according to claim 7, wherein the actuator comprises a piston (528) and the proximity switch comprises a magnet (556) operatively coupled to the piston and a sensor (552a/b) to sense proximity of the magnet.

## Patentansprüche

1. Quetschventil, aufweisend:
einen Ventilkörper (300), aufweisend:
einen oberen Körperabschnitt (304) mit einem ersten Kanal (308);
einen unteren Körperabschnitt (302) mit einem zweiten Kanal (306), wobei der obere Körperabschnitt mit einem Gelenk (312) beweglich mit dem unteren Körperabschnitt verbunden ist,
einen Schließmechanismus (314) zum Koppeln des unteren Körperabschnitts (302) und des oberen Körperabschnitts (304),
wobei der erste Kanal (308) und der zweite Kanal (306) einen Durchgang (310) definieren, der sich entlang einer Achse (116) von einer ersten Seite des Ventilkörpers zu einer zweiten Seite des Ventilkörpers erstreckt, um einen flexiblen Schlauch (102) aufzunehmen, wenn der erste Körperabschnitt mit dem zweiten Körperabschnitt gekoppelt ist, und wobei der Durchgang (310) den flexiblen Schlauch (102) hält, um zu verhindern, dass sich der flexible Schlauch relativ zu dem ersten und dem zweiten Körperabschnitt in einer axialen Richtung bewegt;
wobei der obere Körperabschnitt eine Längsöffnung (210) aufweist, die im Wesentlichen senkrecht zu dem Durchgang (234) ist, um einen Ventilschaft (212) verschiebbar aufzunehmen;
wobei ein Strömungssteuerelement (214) in dem Durchgang (234) angeordnet ist und gleitend von der Längsöffnung aufgenommen wird,
**dadurch gekennzeichnet,**
**dass** das Strömungssteuerelement (214) einen sphärisch geformten Ventilstopfen aufweist, der angeordnet ist, um durch den Ventilschaft (212) bewegt zu werden, um den flexiblen Schlauch zu quetschen,
**dass** der obere Körperabschnitt ein erstes abgestuftes Profil (320) hat, das einen ersten vorstehenden Abschnitt (324a) mit einer ersten Öffnung definiert, die sich durch den ersten vorstehenden Abschnitt erstreckt, der untere Körperabschnitt ein zweites abgestuftes Profil (320) hat, das einen zweiten vorstehenden Abschnitt (324b) mit einer zweiten Öffnung (325) definiert, die sich durch den zweiten vorstehenden Abschnitt erstreckt, wobei das erste abgestufte Profil zusammengesteckt mit dem zweiten abgestuften Profil in Eingriff steht, wenn die erste Öffnung mit der zweiten Öffnung ausgerichtet ist, und dass der Schließmechanismus (314) einen federbelasteten Stift (316) aufweist, der durch die erste und die zweite Öffnung aufgenommen wird, um den ersten Körperabschnitt und den zweiten Körperabschnitt in einer geschlossenen Position miteinander zu verriegeln.

2. Quetschventil nach Anspruch 1, ferner aufweisend eine Buchse (134), die in der Längsöffnung angeordnet ist, um die Reibung mit dem Ventilschaft zu verringern.

3. Quetschventil nach einem der vorhergehenden Ansprüche, wobei der erste Kanal und der zweite Kanal gekrümmte Wände aufweisen.

4. Quetschventil nach einem der vorhergehenden Ansprüche, wobei der Durchgang im Wesentlichen eine Außenfläche des flexiblen Schlauchs umgibt, wenn der flexible Schlauch an das Quetschventil gekoppelt ist.

5. Quetschventil nach einem der vorhergehenden Ansprüche, ferner aufweisend eine erste Hülse (418), die lösbar mit dem ersten Kanal gekoppelt ist, und/oder eine zweite Hülse, die lösbar mit dem zweiten Kanal gekoppelt ist, um eine Größe des Durchgangs zu verringern, wenn der obere und der untere Körperabschnitte miteinander gekoppelt sind, um ein relativ kleineres flexibles Rohr aufzunehmen, eine Zugangsbohrung (436a/b) durch mindestens einen von dem oberen und unteren Körperabschnitt, und eine Schraube (438a/b), die sich durch die Zugangsbohrung erstreckt, um die Hülse im Durchgang zu halten.

6. Quetschventil nach Anspruch 5, ferner aufweisend eine Öffnung oder Nut (434a/b) entlang der Hülse, um die Schraube aufzunehmen.

7. Quetschventil nach einem der vorhergehenden Ansprüche, ferner aufweisend einen Aktuator (506) und ein Positionsrückkopplungssystem (502), das mit einem Gehäuse (526) des Aktuators (506) gekoppelt ist, wobei das Positionsrückkopplungssystem einen Näherungsschalter (544) aufweist, der in dem Gehäuse des Aktuators angebracht ist und angeordnet ist, um eine Bewegung des Aktuators zu erfassen.

8. Quetschventil nach Anspruch 7, wobei der Aktuator einen Kolben (528) aufweist und der Näherungsschalter einen mit dem Kolben funktionell gekoppelten Magneten (556) und einen Sensor (552a/b), um die Nähe des Magneten zu erfassen, aufweist.

## Revendications

1. Robinet à manchon comprenant :
un corps de robinet (300) comprenant :
une partie de corps supérieure (304) ayant un premier canal (308) ;
une partie de corps inférieure (302) ayant un second canal (306), la partie de corps supérieure couplée de façon mobile à la partie de corps inférieure par une charnière (312),
un mécanisme de verrouillage (314) pour coupler la partie de corps inférieure (302) et la partie de corps supérieure (304),
dans lequel le premier canal (308) et le second canal (306) définissent un passage (310) s'étendant le long d'un axe (116) depuis un premier côté du corps de robinet vers un second côté du corps de robinet pour recevoir une tubulure flexible (102) lorsque la première partie de corps est couplée à la seconde partie de corps, et dans lequel le passage (310) est pour retenir la tubulure flexible (102) pour empêcher la tubulure flexible de se déplacer par rapport aux première et seconde parties de corps dans une direction axiale ;
dans lequel la partie de corps supérieure inclut une ouverture longitudinale (210) essentiellement perpendiculaire au passage (234) pour recevoir une tige de robinet (212) par coulissement ;
un membre de commande d'écoulement (214) disposé à l'intérieur du passage (234) et reçu en coulissement par l'ouverture longitudinale, **caractérisé en ce que** le membre de commande d'écoulement (214) comprend un opercule de robinet sphérique qui est agencé pour être déplacé par la tige de robinet (212) pour pincer la tubulure flexible, **en ce que** la partie de corps supérieure présente un premier profilé étagé (320) définissant une première partie en saillie (324a) avec une première ouverture s'étendant à travers la première partie en saillie, la partie de corps inférieure présente un second profilé étagé (320) définissant une seconde partie en saillie (324b) avec une seconde ouverture (325) s'étendant à travers la seconde partie en saillie, dans lequel le premier profilé étagé engage par correspondance le second profilé étagé avec la première ouverture alignée avec la seconde ouverture, et **en ce que**
le mécanisme de verrouillage (314) comprend un linguet à ressort (316) reçu à travers les première et seconde ouvertures pour verrouiller la première partie de corps et la seconde partie de corps ensemble dans une position fermée.

2. Robinet à manchon selon la revendication 1, comprenant en outre une douille (134) disposée dans l'ouverture longitudinale pour réduire la friction avec la tige de robinet.

3. Robinet à manchon selon l'une quelconque des revendications précédentes, dans lequel le premier canal et le second canal comprennent des parois incurvées.

4. Robinet à manchon selon l'une quelconque des revendications précédentes, dans lequel le passage entoure essentiellement une surface extérieure de la tubulure flexible lorsque la tubulure flexible est couplée au robinet à manchon.

5. Robinet à manchon selon l'une quelconque des revendications précédentes, comprenant en outre un premier manchon (418) couplé de façon amovible au premier canal et/ou un second manchon couplé de façon amovible au second canal pour réduire une taille du passage lorsque les parties de corps supérieure et inférieure sont couplées ensemble pour recevoir une tubulure flexible relativement plus petite, un alésage d'accès (436a/b) à travers au moins une des parties de corps supérieure et inférieure, et une vis (438a/b) s'étendant à travers l'alésage d'accès pour retenir le manchon à l'intérieur du passage.

6. Robinet à manchon selon la revendication 5, comprenant en outre une ouverture ou une rainure (434a/b) le long du manchon pour recevoir la vis.

7. Robinet à manchon selon l'une quelconque des revendications précédentes, comprenant en outre un déclencheur (506) et un système de renvoi en position (502) couplé à un logement (526) du déclencheur (506), le système de renvoi en position comprenant un interrupteur de proximité (544) monté à l'intérieur du logement du déclencheur et agencé pour détecter le mouvement du déclencheur.

8. Robinet à manchon selon la revendication 7, dans lequel le déclencheur comprend un piston (528) et l'interrupteur de proximité comprend un aimant (556) couplé de façon opérationnelle au piston et un capteur (552a/b) pour détecter la proximité de l'aimant.
